# EUROPEAN PATENT SPECIFICATION

(11) **EP 2 960 698 B1**
(45) Date of publication and mention of the grant of the patent: **09.08.2017**
(21) Application number: 14174705.5
(22) Date of filing: 27.06.2014
(51) Int. Cl.: G02B 6/36, G02B 6/44, G02B 6/255

(54) **Splice holder for splice protectors protecting splices between optical fibers provided by single fiber splicing**
Spleißhalterung für Spleißschutze zum Schutz von Spleißen zwischen optischen Fasern durch Einzelfaserspleißung
Support d'épissures de protection d'épissure entre des fibres optiques fournies par épissurage d'une seule fibre

(43) Date of publication of application: 30.12.2015
(73) Proprietor: CCS Technology, Inc., Wilmington, DE 19803 (US)
(72) Inventor: Kusmierek, Marcin, 93-109 Lodz (PL); Ruda, Michal, 93-377 Lodz (PL)
(74) Representative: Sturm, Christoph

(56) References cited:
- EP-A1- 1 929 348
- US-A1- 2007 047 892
- US-A1- 2011 091 179
- US-B1- 6 249 635
- US-B1- 6 249 636
- US-B2- 8 385 711

## Description

The present patent application relates to a splice holder for splice protectors protecting splices between optical fibers provided by single fiber splicing.

When constructing fiber optic cable networks, fiber optic distribution devices are required for ensuring structured wiring of the fiber optic cables. The product catalogue "Accessories for Fiber Optic Networks, Edition 1, Corning Cable Systems, Page 150, Year 2001" discloses a fiber optic distribution device in the form of a distribution cabinet, wherein the distribution cabinet comprises a housing and fiber optic modules positioned inside the housing. The fiber optic modules can handle junction points between optical fibers of fiber optic cables, wherein such fiber optic modules can be provided by patch modules and/or splice modules.

Within splice modules splices between optical fibers have to be handled. Such splices between optical fibers can be provided by single fiber splicing or mass fusion splicing. The splices between optical fibers are protected by so-called splice protectors. When splices between optical fibers are provided by single fiber splicing, the splices are protected either by heat-shrink splice protectors or by crimp splice protectors. When splices between optical fibers are provided by mass fusion splicing, the splices are protected by a transition box splice protector like a ribbon cable box. Splice holders are used within a splice module to hold splice protectors protecting the splices between optical fibers.

US 8,385,711 B2 discloses a splice holder having areas for the handling of splice protectors protecting splices provided by single fiber splicing and areas for the handling of splice protectors protecting splices provided by mass fusion splicing.

US 8,559,784 B2 and US 8,254,742 B2 each disclose a splice holder for holding splice protectors protecting splices between optical fibers provided by single fiber splicing.

Other prior art is disclosed by US 6,249,636 B1, US 6,249,635 B1, EP 1 929 348 A1, US 2011/091179 A1, and US 2007/047892 A1.

Known splice holders for splice protectors protecting splices between optical fibers provided by single fiber splicing are not universal, meaning that they are either configured to hold heat-shrink splice protectors or crimp splice protectors. Further on, known splice holders for splice protectors protecting splices between optical fibers provided by single fiber splicing have a limited capacity for splice protectors which can be held in a defined space having a defined volume, especially a defined height.

The present application is based on the object to provide a universal splice holder for splice protectors protecting splices between optical fibers provided by single fiber splicing having an increased capacity for splice protectors.

The splice holder according to the present patent application is defined in claim 1.

The splice holder comprises a first splice holder section being configured to hold a plurality of heat-shrink splice protectors in an arrangement of a plurality of sloped columns of stacked heat-shrink splice protectors. The splice holder further comprises a second splice holder section being configured to hold a plurality of crimp splice protectors in an arrangement of a plurality sloped columns of stacked crimp splice protectors. The first splice holder section and the second splice holder section are connected together by elements providing predetermined breaking points so that the first splice holder section and the second splice holder section are separable from each other by breaking one of the sections from the other section along the breaking points.

The splice holder according to the present patent application is universal and can be used to hold on the one hand heat-shrink splice protectors or alternatively on the other hand crimp splice protectors.

Further on, the splice holder according to the present patent application has an increased capacity for splice protectors which can be held in a defined space having a restricted volume, especially a restricted height.

According to a preferred embodiment, the first splice holder section comprises two splice holder sub-sections running parallel to each other and further comprises a connecting sub-section connecting the two splice holder sub-sections at one end of the same, wherein each of the splice holder sub-sections comprises a plurality of parallel, sloped partitions, wherein each two adjacent partitions of each splice holder sub-section define one splice holder compartment, and wherein each splice holder compartment is configured to receive a sloped column of stacked heat-shrink splice protectors. The second splice holder section comprises a plurality of parallel, sloped partitions, wherein each two adjacent partitions define one splice holder compartment, and wherein each splice holder compartment is configured to receive a sloped column of stacked crimp splice protectors.

Before installation, the second splice holder section is positioned between the two splice holder sub-sections of the first splice holder sections and connected to the two splice holder sub-sections by the elements providing the predetermined breaking points. For installation, the two splice holder sections become separated from each other by breaking one of the sections from the other section along the predetermined breaking points. An installer uses one of the two splice holder sections depending on the kind of used splice protectors. This provides a universal splice holder having increased capacity for splice protectors.

Preferably, the partitions of each splice holder sub-section of the first splice holder section are sloped relative to a bottom wall of the respective splice holder sub-section and the partitions of the second splice holder section are sloped relative to a bottom wall of the second splice holder section, wherein the slope angle of the partitions of each splice holder sub-section of the first splice holder section and the slope angle of the partitions of the second splice holder section are in the range between 30° and 75°. This provides a further increased capacity for splice protectors.

Preferably, each splice holder compartment of each splice holder sub-section of the first splice holder section provides at least three splice holder sub-compartments stacked above each other to receive a column of at least three stacked heat-shrink splice protectors. This provides a further increased capacity for splice protectors within the splice holder.

In the region of each of said splice holder compartments a cross section of a first, lower splice holder sub-compartment is larger than a cross section of a second, middle splice holder sub-compartment, and the cross section of the second, middle splice holder sub-compartment is larger than a cross section of a third, upper splice holder sub-compartment. The different cross sections of the splice holder sub-compartment provide a uniform damping force for splice protectors positioned in the splice holder sub-compartment.

Preferably, each splice holder compartment of the second splice holder section provides at least three splice holder sub-compartments stacked above each other to receive a column of at least three stacked crimp splice protectors, wherein in the region of each of said splice holder compartments cross sections of the respective splice holder sub-compartments are generally similar. This provides a further increased capacity for splice protectors.

Embodiments of the splice holder are given in the dependent claims and the description below. Exemplary embodiments will be explained in more detail with reference to the drawing, in which:
- Figure 1: shows a perspective view of a splice holder for splice protectors protecting splices between optical fibers according to the present application;
- Figure 2: shows a top view of the splice holder of Figure 1;
- Figure 3: shows a perspective view of the first splice holder section of the splice holder of Figure 1;
- Figure 4: shows a side view of the first splice holder section of Figure 3;
- Figure 5: shows a perspective view of the second splice holder section of the splice holder of Figure 1;
- Figure 6: shows a side view of the second splice holder section of Figure 5;
- Figure 7: shows a perspective view of another splice holder for splice protectors protecting splices between optical fibers according to the present application; and
- Figure 8: shows a side view of the first splice holder section of the splice holder of Figure 7.

The present patent application relates to a splice holder for splice protectors protecting splices between optical fibers provided by single fiber splicing.

The splice holder 10 of the present application comprises a first splice holder section 11 being configured to hold a plurality of heat-shrink splice protectors in an arrangement of a plurality of sloped columns of stacked heat-shrink splice protectors.

The splice holder 10 of the present application comprises further a second splice holder section 12 being configured to hold a plurality of crimp splice protectors in an arrangement of a plurality sloped columns of stacked crimp splice protectors.

The first splice holder section 11 and the second splice holder section 12 are connected together by elements 22, 23 providing predetermined breaking points so that the first splice holder section 11 and the second splice holder section 12 are separable from each other by breaking one of the sections 11, 12 from the other section 12, 11 along the predetermined breaking points.

Before installation, the first splice holder section 11 and the second splice holder section 12 of the splice holder 10 are connected by the elements 22, 23 providing the predetermined breaking points. For installation, the two splice holder sections 11, 12 of the splice holder 10 become separated from each other by breaking one of the splice holder sections from the other splice holder sections along the predetermined breaking points provided by the elements 22, 23. An installer uses one of the two splice holder sections 11, 12 depending on the kind of used splice protectors.

Preferably, the first splice holder section 11 comprises two splice holder sub-sections 13, 14 running parallel to each other and further comprises a connecting sub-section 15 connecting the two splice holder sub-sections 13, 14 at one end of the same. At the opposite end of the two splice holder sub-sections 13, 14 the same are not connected to each other by such a connecting sub-section 15.

Each of the splice holder sub-sections 13, 14 of the first splice holder section 11 comprises a plurality of parallel, sloped partitions 16, wherein each two adjacent partitions 16 of each splice holder sub-section 13, 14 define one splice holder compartment 17, and wherein each splice holder compartment 17 is configured to receive a sloped column of stacked heat-shrink splice protectors.

The partitions 16 of each splice holder sub-section 13, 14 of the first splice holder section 11 are sloped relative to a bottom wall 18 of the respective splice holder sub-section 13, 14. The slope angle of the partitions 16 of each splice holder sub-section 13, 14 of the first splice holder section 11 relative to the bottom wall 18 of the respective splice holder sub-section 13, 14 is in the range between 30° and 75°.

Each one splice holder compartment 17 of the splice holder sub-section 13 acts together with one splice holder compartment 17 of the splice holder sub-section 14. So, each heat-shrink splice protector is held within two splice holder compartment 17, namely within a splice holder compartment 17 of the splice holder sub-section 13 and within a splice holder compartment 17 of the splice holder sub-section 14. For that, the splice holder compartment of the two splice holder sub-sections 13, 14 of the first splice holder section 11 are aligned with each other. The slope angle of the partitions of the splice holder sub-section and the slope angle of the partitions of the splice holder sub-section are generally the similar, in the shown exemplary embodiment identical.

The second splice holder section 12 comprises a plurality of parallel, sloped partitions 19, wherein each two adjacent partitions 19 define one splice holder compartment 20. Each splice holder compartment 20 of the second splice holder section 12 is configured to receive a sloped column of stacked crimp splice protectors. The partitions 19 of the second splice holder section 12 are sloped relative to a bottom wall 21 of the second splice holder section 12. The slope angle of the partitions 19 of the second splice holder section 12 relative to the bottom wall 21 of the second splice holder section 12 is in the range between 30 and 75°.

Preferably, the slope angle of the partitions 16 of the first splice holder section 11 and the slope angle of the partitions 19 of the second splice holder section 12 are generally similar, in the shown exemplary embodiment identical.

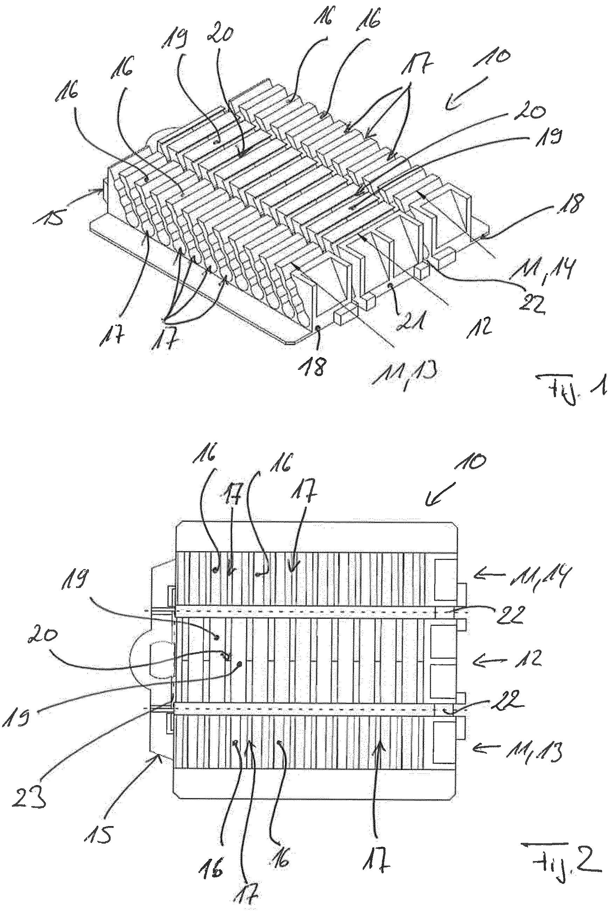

Before installation, the second splice holder section 12 is positioned between the two splice holder sub-sections 13, 14 of the first splice holder sections 11 and connected to the first splice holder sections 11 by the elements 22, 23 providing the predetermined breaking points along the dotted lines shown in Figure 2. First elements 23 connect the second splice holder section 12 to the two splice holder sub-sections 13, 14 of the first splice holder sections 11. At least one second element 23 connects the second splice holder section 12 to the connecting sub-section 15 of the first splice holder sections 11. Each splice holder compartment 17 of each splice holder sub-section 13, 14 of the first splice holder section 11 provides preferably at least three, in the embodiment shown three, splice holder sub-compartments 17a, 17b, 17c stacked above each other to receive a respective column of at least three stacked heat-shrink splice protectors.

In the region of each of said splice holder compartments 17 a cross section of a first, lower splice holder sub-compartment 17a is larger than a cross section of a second, middle splice holder sub-compartment 17b, and the cross section of the second, middle splice holder sub-compartment 17b is larger than a cross section of a third, upper splice holder sub-compartment 17c. This allows to reduce the risk of stresses and deformations to the heat-shrink splice protectors which way occur when fixing the heat-shrink splice protectors in the region of the splice holder compartments 17.

Each splice holder compartment 20 of the second splice holder section 12 provides preferably at least three, in the embodiment shown three, splice holder sub-compartments 20a, 20b, 20c stacked above each other to receive a respective column of at least three stacked crimp splice protectors, wherein in the region of each of said splice holder compartments 20 cross sections of the respective splice holder sub-compartments 20a, 20b, 20c are generally similar, in the shown exemplary embodiment identical. The shape of the splice holder sub-compartments 20a, 20b, 20c are adapted to the shape of crimp splice protectors having a trapezoid shape or rectangular shape with rounded corners.

The above details relating to the splice holder sub-compartments 20a, 20b, 20c and the splice holder sub-compartments 17a, 17b, 17c can also be used in case the respective splice holder compartments 17, 20 comprise only two splice holder sub-compartments or more than three splice holder sub-compartments per splice holder compartment.

As described above, for installation, the two splice holder sections 11, 12 of the splice holder 10 become separated from each other. An installer uses only one of the two splice holder sections 11, 12 depending on the kind of used splice protectors. The splice holder 10 according to the present patent application is universal and can be used to hold on the one hand heat-shrink splice protectors or alternatively on the other hand crimp splice protectors.

Further on, the splice holder 10 according to the present patent application has an increased capacity for splice protectors which can be held in a defined space with a restricted volume, e.g. in an interior space of a splice module like a splice tray having a restricted height between a bottom wall and a top wall or cover of the splice module. In the embodiment shown, the splice holder 10 can accommodate up to 36 heat-shrink splice protectors or alternatively up to 36 crimp splice protectors. However, the number of 36 accommodated splice holders is of exemplary nature only.

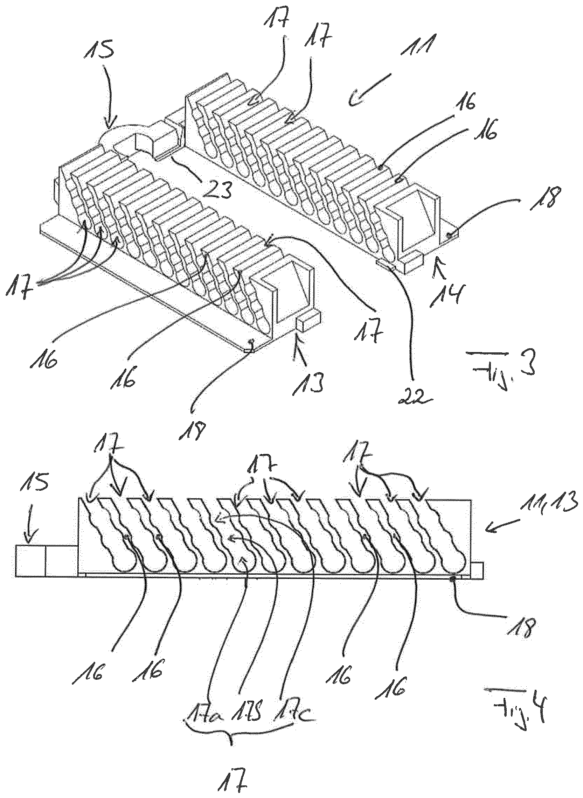

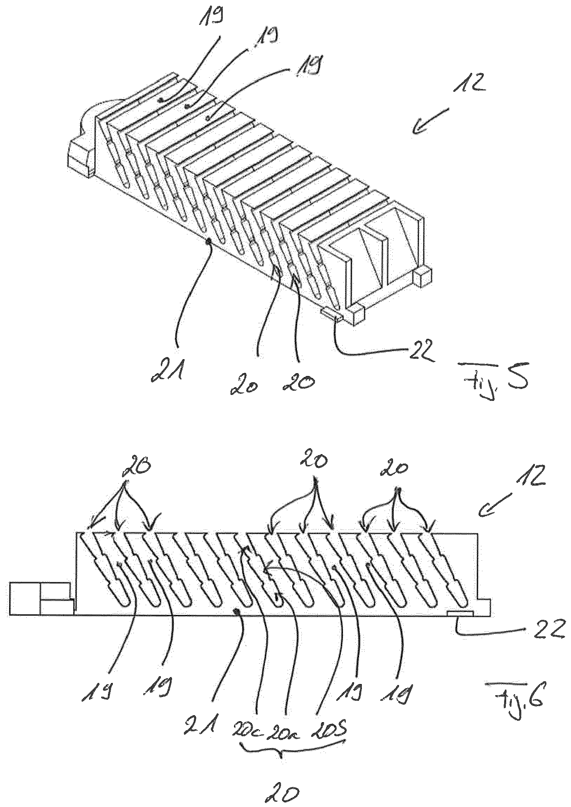

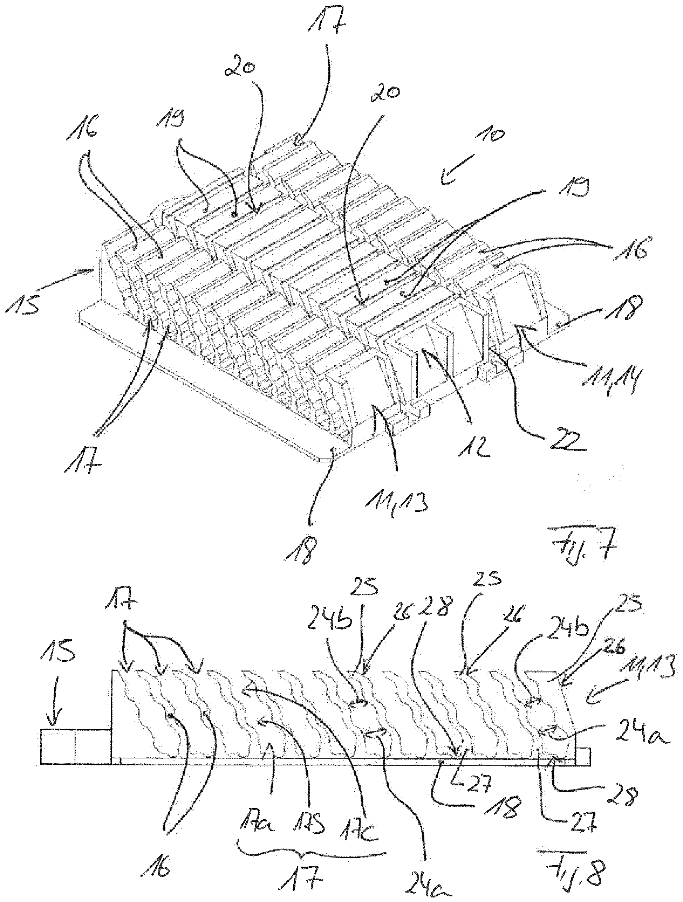

Figure 7 and Figure 8 show details of another splice holder 10 according to the present application. The second splice holder section 12 of the splice holder 10 shown in Figures 7 and 8 being configured to hold a plurality of crimp splice protectors is generally similar as, in the shown exemplary embodiment identical to, the second splice holder section 12 of the splice holder 10 shown in Figures 1 to 6. Further on, the separable connection of the second splice holder section 12 being configured to hold a plurality of crimp splice protectors and the first splice holder section 11 being configured to hold a plurality of heat-shrink splice protectors is generally similar, in the shown exemplary embodiment identical. Only the first splice holder section 11 of the splice holder 10 shown in Figures 7 and 8 being configured to hold a plurality of heat-shrink splice protectors differs is some details from the first splice holder section 11 of the splice holder 10 shown in Figures 1 to 6. In the following only these differences will be described. With respect to all other details reference is made to the above description of the splice holder 10 shown in Figures 1 to 6.

As can be best seen in Figure 8, free ends 25 of the partitions 16 of each splice holder sub-section 13, 14 of the first splice holder section 11 being positioned opposite the bottom wall 18 of the first splice holder section 11 are chamfered by chamfers 26. The chamfers 26 make it easier to insert heat-shrink splice protectors into the splice holder compartments 17 of the first splice holder section 11 of the splice holder 10.

Further on, in the embodiment shown in Figures 7 and 8 cutouts 28 are provided at the bottom wall 18 of the first splice holder section 11 and at ends 27 of the partitions 16 of each splice holder sub-section 13, 14 of the first splice holder section 11 being positioned adjacent the bottom wall 18. These cutouts 28 reduce stresses near the ends 27 of the partitions 16 when inserting heat-shrink splice protectors in the splice holder compartments 17 of the first splice holder section 11 of the splice holder 10 and protect the partitions 16 from cracking. The cutouts 28 are preferably asymmetric.

As can be best seen in Figure 8, in the embodiment shown in Figures 7 and 8 a cross section of a transition region 24a between the first, lower splice holder sub-compartment 17a and the second, middle splice holder sub-compartment 17b is bigger than a transition region 24b between the second, middle splice holder sub-compartment 17b and the third, upper splice holder sub-compartment 17c. So, respective gaps between the splice holder sub-compartments 17a and 17b are bigger than gaps width between the splice holder sub-compartment 17b and 17c. This allows to further reduce stress to the partitions 16 and to protect the partitions 16 from cracking when inserting splice protectors into the splice holder compartments 17 of the first splice holder section 11 of the splice holder 10.

### List of reference numerals

- 10: splice holder
- 11: first splice holder section
- 12: second splice holder section
- 13: splice holder sub-section
- 14: splice holder sub-section
- 15: connecting sub-section
- 16: partition
- 17: splice holder compartment
- 17a: splice holder sub-compartment
- 17b: splice holder sub-compartment
- 17c: splice holder sub-compartment
- 18: bottom wall
- 19: partition
- 20: splice holder compartment
- 20a: splice holder sub-compartment
- 20b: splice holder sub-compartment
- 20c: splice holder sub-compartment
- 21: bottom wall
- 22: element
- 23: element
- 24a: transition region
- 24b: transition region
- 25: end
- 26: chamfer
- 27: end
- 28: cutout

## Claims

1. A splice holder (10) for splice protectors protecting splices between optical fibers provided by single fiber splicing, comprising:
a first splice holder section (11) being configured to hold a plurality of heat-shrink splice protectors in an arrangement of a plurality of sloped columns of stacked heat-shrink splice protectors; and
a second splice holder section (12) being configured to hold a plurality of crimp splice protectors in an arrangement of a plurality sloped columns of stacked crimp splice protectors;
wherein the first splice holder section (11) and the second splice holder section (12) are connected together by elements (22, 23) providing predetermined breaking points so that the first splice holder section (11) and the second splice holder section (12) are separable from each other by breaking one of the sections from the other section along the breaking points.

2. The splice holder of claim 1, **characterized in that**
the first splice holder section (11) comprises two splice holder sub-sections (13, 14) running parallel to each other and further comprises a connecting sub-section (15) connecting the two splice holder sub-sections (13, 14) at one end of the same, wherein each of the splice holder sub-sections (13, 14) comprises a plurality of parallel, sloped partitions (16), wherein each two adjacent partitions (16) of each splice holder sub-section (13, 14) define one splice holder compartment (17), and wherein each splice holder compartment (17) is configured to receive a sloped column of stacked heat-shrink splice protectors;
the second splice holder section (12) comprises a plurality of parallel, sloped partitions (19), wherein each two adjacent partitions (19) define one splice holder compartment (20), and wherein each splice holder compartment (20) is configured to receive a sloped column of stacked crimp splice protectors;
the second splice holder section (12) is positioned between the two splice holder sub-sections (13, 14) of the first splice holder section (11) and connected to the first splice holder section (11) by the elements (22, 23) providing the breaking points.

3. The splice holder of claim 2, **characterized in that** the partitions (16) of each splice holder sub-section (13, 14) of the first splice holder section (11) are sloped relative to a bottom wall (18) of the respective splice holder sub-section (13,14).

4. The splice holder of claim 3, **characterized in that** free ends (25) of the partitions (16) of each splice holder sub-section (13, 14) of the first splice holder section (11) being positioned opposite the bottom wall (18) of the first splice holder section (11) are chamfered.

5. The splice holder of claims 3 or 4, **characterized in that** cutouts (28) are provided at the bottom wall (18) of the first splice holder section (11) and/or at ends (27) of the partitions (16) of each splice holder sub-section (13, 14) of the first splice holder section (11) being positioned adjacent the bottom wall (18).

6. The splice holder of one of claims 2 to 5, **characterized in that** the partitions (19) of the second splice holder section (12) are sloped relative to a bottom wall (21) of the second splice holder section (12).

7. The splice holder of one of claims 3 to 6, **characterized in that** the slope angle of the partitions (16) of each splice holder sub-section (13, 14) of the first splice holder section (11) and the slope angle of the partitions (19) of the second splice holder section (12) are in the range between 30° and 75°.

8. The splice holder of one of claims 2 to 7, **characterized in that** each splice holder compartment (17) of each splice holder sub-section (13, 14) of the first splice holder section (11) provides at least three splice holder sub-compartments (17a, 17b, 17c) stacked above each other to receive a column at least three stacked heat-shrink splice protectors, wherein in the region of each of said splice holder compartments (17) a cross section of a first, lower splice holder sub-compartment (17a) is larger than a cross section of a second, middle splice holder sub-compartment (17b), and the cross section of the second, middle splice holder sub-compartment (17b) is larger than a cross section of a third, upper splice holder sub-compartment (17c).

9. The splice holder of claim 8, **characterized in that** a cross section of a transition region (24a) between the first, lower splice holder sub-compartment (17a) and the second, middle splice holder sub-compartment (17b) is bigger than a transition region (24b) between the second, middle splice holder sub-compartment (17b) and the third, upper splice holder sub-compartment (17c).

10. The splice holder of one of claims 2 to 9, **characterized in that** each splice holder compartment (20) of the second splice holder section (12) provides at least three splice holder sub-compartments (20a, 20b, 20c) stacked above each other to receive a column of at least three stacked crimp splice protectors, wherein in the region of each of said splice holder compartments (20) cross sections of the respective splice holder sub-compartments (20a, 20b, 20c) are generally similar.

## Patentansprüche

1. Spleißhalter (10) für Spleißschutzvorrichtungen, die Spleiße zwischen Lichtleiterfasern schützen, die durch Einfachspleißen bereitgestellt werden, der Folgendes umfasst:
einen ersten Spleißhalterabschnitt (11), der konfiguriert ist, mehrere Wärmeschrumpf-Spleißschutzvorrichtungen in einer Anordnung von mehreren geneigten Reihen von gestapelten Wärmeschrumpf-Spleißschutzvorrichtungen zu halten, und
einen zweiten Spleißhalterabschnitt (12), der konfiguriert ist, mehrere Crimp-Spleißschutzvorrichtungen in einer Anordnung von mehreren geneigten Reihen von gestapelten Crimp-Spleißschutzvorrichtungen zu halten;
wobei der erste Spleißhalterabschnitt (11) und der zweite Spleißhalterabschnitt (12) durch Elemente (22, 23) miteinander verbunden sind, die vorgegebene Bruchstellen bereitstellen, so dass der erste Spleißhalterabschnitt (11) und der zweite Spleißhalterabschnitt (12) durch Brechen eines der Abschnitte von dem anderen Abschnitt entlang der Bruchstellen trennbar sind.

2. Spleißhalter nach Anspruch 1, **dadurch gekennzeichnet, dass**
der erste Spleißhalterabschnitt (11) zwei Spleißhalterunterabschnitte (13, 14) umfasst, die parallel zueinander verlaufen und ferner einen verbindenden Unterabschnitt (15) umfassen, der die beiden Spleißhalterunterabschnitte (13, 14) an dem einen Ende derselben verbindet, wobei jeder der Spleißhalterunterabschnitte (13, 14) mehrere parallele, geneigte Trennwände (16) umfasst, wobei zwei benachbarte Trennwände (16) jedes Spleißhalterunterabschnitts (13, 14) jeweils ein Spleißhalterfach (17) definieren und wobei jedes Spleißhalterfach (17) konfiguriert ist, eine geneigte Reihe von gestapelten Wärmeschrumpf-Spleißschutzvorrichtungen aufzunehmen;
der zweite Spleißhalterabschnitt (12) mehrere parallele, geneigte Trennwände (19) umfasst, wobei zwei benachbarte Trennwände (19) jeweils ein Spleißhalterfach (20) definieren und wobei jedes Spleißhalterfach (20) konfiguriert ist, eine geneigte Reihe von gestapelten Crimp-Spleißschutzvorrichtungen aufzunehmen;
der zweite Spleißhalterabschnitt (12) zwischen den beiden Spleißhalterunterabschnitten (13, 14) des ersten Spleißhalterabschnitts (11) positioniert ist und mit dem ersten Spleißhalterabschnitt (11) durch die Elemente (22, 23) verbunden ist, die Bruchstellen bereitstellen.

3. Spleißhalter nach Anspruch 2, **dadurch gekennzeichnet, dass** die Trennwände (16) jedes Spleißhalterunterabschnitts (13, 14) des ersten Spleißhalterabschnitts (11) relativ zu einer Bodenwand (18) des jeweiligen Spleißhalterunterabschnitts (13, 14) geneigt sind.

4. Spleißhalter nach Anspruch 3, **dadurch gekennzeichnet, dass** freie Enden (25) von den Trennwänden (16) jedes Spleißhalterunterabschnitts (13, 14) des ersten Spleißhalterabschnitts (11), die gegenüber von der Bodenwand (18) des ersten Spleißhalterabschnitts (11) positioniert sind, abgeschrägt sind.

5. Spleißhalter nach Anspruch 3 oder 4, **dadurch gekennzeichnet, dass** Ausschnitte (28) an der Bodenwand (18) des ersten Spleißhalterabschnitts (11) und/oder an Enden (27) der Trennwände (16) jedes Spleißhalterunterabschnitts (13, 14) des ersten Spleißhalterabschnitts (11), die benachbart zu der Bodenwand (18) positioniert sind, bereitgestellt werden.

6. Spleißhalter nach einem der Ansprüche 2 bis 5, **dadurch gekennzeichnet, dass** die Trennwände (19) des zweiten Spleißhalterabschnitts (12) relativ zu einer Bodenwand (21) des zweiten Spleißhalterabschnitts (12) geneigt sind.

7. Spleißhalter nach einem der Ansprüche 2 bis 6, **dadurch gekennzeichnet, dass** der Neigungswinkel der Trennwände (16) jedes Spleißhalterunterabschnitts (13, 14) des ersten Spleißhalterabschnitts (11) und der Neigungswinkel der Trennwände (19) des zweiten Spleißhalterabschnitts (12) in dem Bereich von 30° bis 75° liegen.

8. Spleißhalter nach einem der Ansprüche 2 bis 7, **dadurch gekennzeichnet, dass** jedes Spleißhalterfach (17) jedes Spleißhalterunterabschnitts (13, 14) des ersten Spleißhalterabschnitts (11) mindestens drei Spleißhalterunterfächer (17a, 17b, 17c) bereitstellt, die übereinander gestapelt sind, um eine Reihe von mindestens drei gestapelten Wärmeschrumpf-Spleißschutzvorrichtungen aufzunehmen, wobei in dem Gebiet jedes der Spleißhalterfächer (17) ein Querschnitt eines ersten, unteren Spleißhalterunterfachs (17a) größer ist als ein Querschnitt eines zweiten, mittleren Spleißhalterunterfachs (17b) und der Querschnitt des zweiten, mittleren Spleißhalterunterfachs (17b) größer ist als ein Querschnitt eines dritten, oberen Spleißhalterunterfachs (17c).

9. Spleißhalter nach Anspruch 8, **dadurch gekennzeichnet, dass** ein Querschnitt eines Übergangsgebiets (24a) zwischen dem ersten, unteren Spleißhalterunterfachs (17a) und dem zweiten, mittleren Spleißhalterunterfachs (17b) größer ist als ein Übergangsgebiet (24b) zwischen dem zweiten, mittleren Spleißhalterunterfachs (17b) und dem dritten, oberen Spleißhalterunterfachs (17c).

10. Spleißhalter nach einem der Ansprüche 2 bis 9, **dadurch gekennzeichnet, dass** jedes Spleißhalterfach (20) des zweiten Spleißhalterabschnitts (12) mindestens drei Spleißhalterunterfächer (20a, 20b, 20c) bereitstellt, die übereinander gestapelt sind, um eine Reihe von mindestens drei gestapelten Crimp-Spleißschutzvorrichtungen aufzunehmen, wobei in dem Gebiet jedes der Spleißhalterfächer (20) Querschnitte der jeweiligen Spleißhalterunterfächer (20a, 20b, 20c) im Allgemeinen ähnlich sind.

## Revendications

1. Support (10) d'épissures pour protections d'épissures protégeant des épissures entre des fibres optiques procurées par un épissurage monofibre, le support d'épissures comprenant :
une première partie (11) de support d'épissures configurée pour détenir une pluralité de protections d'épissures par thermorétraction selon un agencement d'une pluralité de colonnes inclinées de protections d'épissures par thermorétraction empilées ; et
une deuxième partie (12) de support d'épissures configurée pour détenir une pluralité de protections d'épissures par sertissage selon un agencement d'une pluralité de colonnes inclinées de protections d'épissures par sertissage empilées ;
dans lequel la première partie (11) de support d'épissures et la deuxième partie (12) de support d'épissures sont raccordées entre elles par des éléments (22, 23) procurant des points de rupture prédéterminés permettant la séparation l'une de l'autre de la première partie (11) de support d'épissures et de la deuxième partie (12) de support d'épissures par rupture d'une des parties vis-à-vis de l'autre partie suivant les points de rupture.

2. Support d'épissures selon la revendication 1, **caractérisé en ce que**
la première partie (11) de support d'épissures comprend deux sous-parties (13, 14) de support d'épissures s'étendant parallèlement entre elles et comprend en outre une sous-partie de raccordement (15) raccordant les deux sous-parties (13, 14) de support d'épissures au niveau d'une de leurs extrémités, chacune des sous-parties (13, 14) de support d'épissures comprenant une pluralité de cloisons inclinées parallèles (16), chaque paire de cloisons adjacentes (16) de chaque sous-partie (13, 14) de support d'épissures définissant un compartiment (17) de support d'épissures, et chaque compartiment (17) de support d'épissures étant configuré pour recevoir une colonne inclinée de protections d'épissures par thermorétraction empilées ;
la deuxième partie (12) de support d'épissures comprend une pluralité de cloisons inclinées parallèles (19), chaque paire de cloisons adjacentes (19) définissant un compartiment (20) de support d'épissures, et chaque compartiment (20) de support d'épissures étant configuré pour recevoir une colonne inclinée de protections d'épissures par sertissage empilées ;
la deuxième partie (12) de support d'épissures est placée entre les deux sous-parties (13, 14) de support d'épissures de la première partie (11) de support d'épissures et raccordée à la première partie (11) de support d'épissures par les éléments (22, 23) procurant les points de rupture.

3. Support d'épissures selon la revendication 2, **caractérisé en ce que** les cloisons (16) de chaque sous-partie (13, 14) de support d'épissures de la première partie (11) de support d'épissures sont inclinées par rapport à une paroi de dessous (18) de la sous-partie respective (13, 14) de support d'épissures.

4. Support d'épissures selon la revendication 3, **caractérisé en ce que** des extrémités libres (25) des cloisons (16) de chaque sous-partie (13, 14) de support d'épissures de la première partie (11) de support d'épissures placées à l'opposé de la paroi de dessous (18) de la première partie (11) de support d'épissures sont chanfreinées.

5. Support d'épissures selon les revendications 3 ou 4, **caractérisé en ce que** des découpes (28) sont ménagées au niveau de la paroi de dessous (18) de la première partie (11) de support d'épissures et/ou au niveau d'extrémités (27) des cloisons (16) de chaque sous-partie (13, 14) de support d'épissures de la première partie (11) de support d'épissures placées au voisinage de la paroi de dessous (18).

6. Support d'épissures selon l'une des revendications 2 à 5, **caractérisé en ce que** les cloisons (19) de la deuxième partie (12) de support d'épissures sont inclinées par rapport à une paroi de dessous (21) de la deuxième partie (12) de support d'épissures.

7. Support d'épissures selon l'une des revendications 2 à 6, **caractérisé en ce que** l'angle d'inclinaison des cloisons (16) de chaque sous-partie (13, 14) de support d'épissures de la première partie (11) de support d'épissures et l'angle d'inclinaison des cloisons (19) de la deuxième partie (12) de support d'épissures sont compris entre 30° et 75°.

8. Support d'épissures selon l'une des revendications 2 à 7, **caractérisé en ce que** chaque compartiment (17) de support d'épissures de chaque sous-partie (13, 14) de support d'épissures de la première partie (11) de support d'épissures procure au moins trois sous-compartiments (17a, 17b, 17c) de support d'épissures empilés les uns au-dessus des autres de manière à recevoir une colonne d'au moins trois protections d'épissures par thermorétraction empilées, dans lequel, dans la région de chacun desdits compartiments (17) de support d'épissures, une section transversale d'un premier sous-compartiment inférieur (17a) de support d'épissures est plus grande qu'une section transversale d'un deuxième sous-compartiment intermédiaire (17b) de support d'épissures, et la section transversale du deuxième sous-compartiment intermédiaire (17b) de support d'épissures est plus grande qu'une section transversale d'un troisième sous-compartiment supérieur (17c) de support d'épissures.

9. Support d'épissures selon la revendication 8, **caractérisé en ce qu'**une section transversale d'une région de transition (24a) entre le premier sous-compartiment inférieur (17a) de support d'épissures et le deuxième sous-compartiment intermédiaire (17b) de support d'épissures est plus importante qu'une région de transition (24b) entre le deuxième sous-compartiment intermédiaire (17b) de support d'épissures et le troisième sous-compartiment supérieur (17c) de support d'épissures.

10. Support d'épissures selon l'une des revendications 2 à 9, **caractérisé en ce que** chaque compartiment (20) de support d'épissures de la deuxième partie (12) de support d'épissures procure au moins trois sous-compartiments (20a, 20b, 20c) de support d'épissures empilés les uns au-dessus des autres pour recevoir une colonne d'au moins trois protections d'épissures par sertissage empilées, dans lequel, dans la région de chacun desdits compartiments (20) de support d'épissures, des sections transversales des sous-compartiments respectifs (20a, 20b, 20c) de support d'épissures sont généralement similaires.
